# EUROPEAN PATENT SPECIFICATION

(11) **EP 3 220 243 B1**
(45) Date of publication and mention of the grant of the patent: **24.06.2020**
(21) Application number: 17155328.2
(22) Date of filing: 09.02.2017
(51) Int. Cl.: G06F 3/041, G06F 3/044

(54) **INPUT DEVICE, CONTROL METHOD OF INPUT DEVICE, AND PROGRAM**
EINGABEVORRICHTUNG, STEUERUNGSVERFAHREN FÜR DIE EINGABEVORRICHTUNG UND PROGRAMM
DISPOSITIF D'ENTRÉE, PROCÉDÉ DE COMMANDE D'UN DISPOSITIF D'ENTRÉE ET PROGRAMME

(30) Priority: 15.03.2016 JP 2016050807
(43) Date of publication of application: 20.09.2017
(73) Proprietor: Alps Alpine Co., Ltd., Tokyo 145-8501 (JP)
(72) Inventor: Nakajima, Satoshi, Ota-ku, Tokyo 145-8501 (JP); Hayasaka, Satoshi, Ota-ku, Tokyo 145-8501 (JP); Kitagawa, Kohei, Ota-ku, Tokyo 145-8501 (JP)
(74) Representative: Schmitt-Nilson Schraud Waibel Wohlfrom Patentanwälte Partnerschaft mbB

(56) References cited:
- JP-A- 2010 257 046
- JP-A- 2013 114 472

## Description

### CLAIM OF PRIORITY

This application claims benefit of Japanese Patent Application No. 2016-050807 filed on March 15, 2016.

### BACKGROUND OF THE INVENTION

### 1. Field of the Invention

The present invention relates to an input device for inputting information corresponding to a touch operation on a detection surface using a change in electrostatic capacitance or the like, a control method of an input device, and a program.

### 2. Description of the Related Art

A sensor for detecting a change in electrostatic capacitance can detect the approach of an object (for example, a finger or a pen) with a simple configuration. For this reason, such a sensor is widely used in user interface devices of various electronic apparatuses, such as a touch pad of a notebook computer or a touch panel of a smart phone.

Generally, in this type of sensor, the approach of an object is detected based on a difference value (detection value - base value) from a base value corresponding to a detection value of the electrostatic capacitance in a state in which the object is not close. Since the change in electrostatic capacitance according to the approach of an object is very small, the detection value of the sensor is likely to be influenced by the temperature characteristics of an electronic circuit or the like. If the detection value changes according to the temperature, the difference value from the base value is also changed. Accordingly, the approach of the object may be erroneously determined. Typically, therefore, a fixed value is not used as a base value, and processing for updating the base value at an appropriate timing is performed. For example, Japanese Unexamined Patent Application Publication No. 2010-257046 discloses a proximity detection device that updates a base value when it is determined that an object, such as a finger, is not close.

However, a temperature change in the environment of use may occur even in a state in which an object is close to the detection surface. Generally, in a known device that detects the approach of an object based on the difference between the base value and the detection value, the base value is not updated during a period in which the object is determined to be close. Therefore, when a large temperature change occurs during the period, the approach of the object may be erroneously determined. In addition, in the environment of use, such as the inside of a vehicle, a large temperature change is likely to occur in a short period of time. Accordingly, it is necessary to consider the erroneous determination described above. Thus, in a known device, there is a disadvantage in that it is not possible to respond to temperature changes or the like in a case where an object is close (state in which a touch operation is determined).

The present invention relates to an input device and a method controlling thereof according to the appended claims. Embodiments that do not fall under the scope of the claims do not describe parts of the invention.

### SUMMARY OF THE INVENTION

The invention provides an input device capable of suppressing erroneous determination due to temperature changes or the like even in a case where a touch operation is determined, a control method of an input device, and a program.

According to a first aspect of the invention, there is provided an input device for inputting information corresponding to a touch operation on a detection surface. The input device includes: a sensor unit that detects a proximity degree of an object with respect to the detection surface and generates a detection value corresponding to the proximity degree of the object as a result of the detection; a change amount calculation unit that calculates a temporal change amount of the generated detection value; a determination unit that determines a touch operation based on the calculated change amount; and a reset unit that performs reset processing in a case where a duration of a state in which the touch operation is determined is equal to or longer than a first predetermined time, two or more peak values that are spatial maximum values of the change amount on the detection surface are present, and a difference between a first peak value, which is a largest peak value, and a second peak value, which is a second largest peak value, is equal to or greater than a predetermined value.

According to this configuration, in a case where the duration of a state, in which a touch operation is determined, is equal to or longer than the first predetermined time and the difference between the first and second peak values is equal to or greater than the predetermined value, reset processing is performed. In addition, a state in which the duration of a state, in which a touch operation is determined, is long and the difference between the first and second peak values is large can be considered as a state in which an abnormality has occurred in detection. That is, since the input device having the configuration described above detects the abnormalities of detection during a period in which a touch operation is determined and performs reset processing, it is possible to suppress erroneous determination due to temperature changes or the like even in a case where a touch operation is determined.

Preferably, the determination unit determines the touch operation in a case where the peak value is equal to or greater than a predetermined threshold value.

According to this configuration, it is possible to determine a touch operation using a threshold value.

Preferably, the reset unit performs the reset processing in a case where the duration is equal to or longer than the first predetermined time, there are two or more of the peak values that are equal to or greater than the predetermined threshold value, and the difference between the first and second peak values is equal to or greater than the predetermined value.

According to this configuration, "two or more peak values equal to or greater than a threshold value determined to be a touch operation are present" can be included in the conditions for performing reset processing.

Preferably, the change amount calculation unit calculates a difference between a base value, which is the detection value in a state in which an object is not close to the detection surface, and the generated detection value as the change amount, and the reset processing includes resetting the base value.

According to this configuration, it is possible to suppress erroneous determination due to temperature changes or the like by resetting the base value.

Preferably, the determination unit determines a first touch operation in a case where the duration is less than the first predetermined time, and determines a second touch operation in a case where the duration is equal to or longer than the first predetermined time.

According to this configuration, it is possible to determine the first and second touch operations based on the duration of a state in which a touch operation is determined.

Preferably, the reset unit performs the reset processing in a case where a state in which the difference between the first and second peak values is equal to or greater than the predetermined value continues for a second predetermined time after the duration becomes equal to or longer than the first predetermined time.

According to this configuration, since the reset processing is performed in a case where the state, in which the difference between the first and second peak values is equal to or greater than the predetermined value, continues for the second predetermined time, it is possible to determine the abnormalities of detection more reliably.

According to a second aspect of the invention, there is provided a control method of an input device for inputting information corresponding to a touch operation on a detection surface. The control method of an input device includes: a step of detecting a proximity degree of an object with respect to the detection surface and generating a detection value corresponding to the proximity degree of the object as a result of the detection; a step of calculating a temporal change amount of the generated detection value; a step of determining a touch operation based on the calculated change amount; and a step of performing reset processing in a case where a duration of a state in which the touch operation is determined is equal to or longer than a first predetermined time, two or more peak values that are spatial maximum values of the change amount on the detection surface are present, and a difference between a first peak value, which is a largest peak value, and a second peak value, which is a second largest peak value, is equal to or greater than a predetermined value.

Preferably, in the step of determining the touch operation, the touch operation is determined in a case where the peak value is equal to or greater than a predetermined threshold value.

Preferably, in the step of performing the reset processing, the reset processing is performed in a case where the duration is equal to or longer than the first predetermined time, there are two or more of the peak values that are equal to or greater than the predetermined threshold value, and the difference between the first and second peak values is equal to or greater than the predetermined value.

Preferably, in the step of calculating the change amount, a difference between a base value, which is the detection value in a state in which an object is not close to the detection surface, and the generated detection value is calculated as the change amount, and the reset processing includes resetting the base value.

Preferably, in the step of determining the touch operation, a first touch operation is determined in a case where the duration is less than the first predetermined time, and a second touch operation is determined in a case where the duration is equal to or longer than the first predetermined time.

Preferably, in the step of performing the reset processing, the reset processing is performed in a case where a state in which the difference between the first and second peak values is equal to or greater than the predetermined value continues for a second predetermined time after the duration becomes equal to or longer than the first predetermined time.

According to a third aspect of the invention, there is provided a program causing a computer to execute the control method of an input device described above.

### BRIEF DESCRIPTION OF THE DRAWINGS

Fig. 1 is an external view of an input device according to an embodiment of the invention;
Fig. 2 is a diagram showing an example of the configuration of the input device;
Fig. 3 is a flowchart showing the processing performed by a determination section;
Fig. 4 is a flowchart showing the processing performed by the determination section;
Fig. 5 is a diagram schematically showing the electrostatic capacitance of the detection surface in normal condition;
Fig. 6 is a diagram schematically showing the electrostatic capacitance of the detection surface in abnormal condition;
Fig. 7 is a diagram schematically showing the electrostatic capacitance of the detection surface in normal condition; and
Fig. 8 is a state transition diagram of the determination state of the determination section.

### DESCRIPTION OF THE PREFERRED EMBODIMENTS

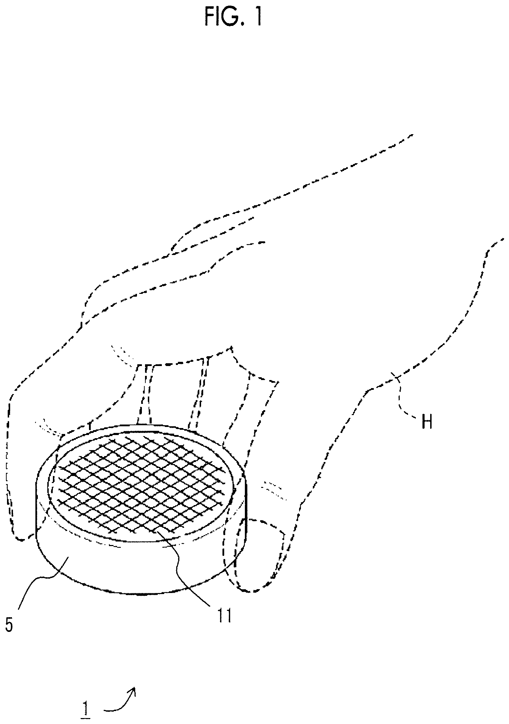

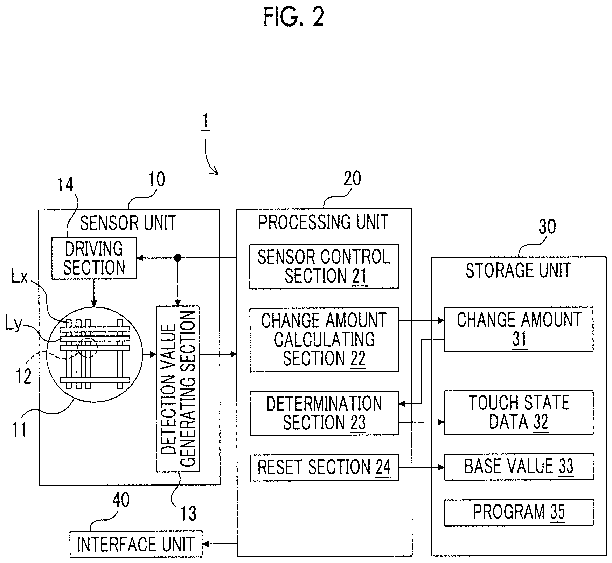

Hereinafter, an input device according to an embodiment of the invention will be described. Fig. 1 is an external view of an input device 1 of the present embodiment, and Fig. 2 is a diagram showing an example of the configuration of the input device 1. As shown in Fig. 1, in the input device 1, an annular conductor portion 5 is disposed along the outer edge of a detection surface 11 having an approximately circular profile when viewed from above. The input device 1 is for inputting information corresponding to a touch operation on the detection surface 11 and a touch operation on the conductor portion 5 using a hand H of a person or the like. Hereinafter, the touch operation on the detection surface 11 may be simply referred to as a "touch operation", and the touch operation on the conductor portion 5 may be referred to as a "grip operation".

As shown in Fig. 2, the input device 1 includes a sensor unit 10, a processing unit 20, a storage unit 30, and an interface unit 40.

### Sensor unit 10

The sensor unit 10 detects the proximity degree of an object, such as the hand H of a person, at each of a plurality of detection positions, and generates a detection value having a value corresponding to the proximity degree of the object, as a result of the detection, for each detection position. "Proximity" in this specification means being in the vicinity, and there is no limitation on whether or not an object, such as the hand H of a person, is in contact with a target. That is, "proximity" is a concept including not only being in the vicinity in a state in which an object, such as the hand H of a person, is not in contact with a target but also being in the vicinity in a state in which the object, such as the hand H of a person, is in contact with the target.

As shown in Fig. 2, the sensor unit 10 includes a sensor matrix (detection surface) 11 in which sensor elements (capacitors) 12 whose electrostatic capacitance changes according to the approach of an object are formed in a matrix, a detection value generating section 13 for generating a detection value corresponding to the electrostatic capacitance of each sensor element 12, and a driving section 14 for applying a driving voltage to the sensor element 12.

The sensor matrix 11 includes a plurality of driving electrodes Lx extending in a vertical direction and a plurality of detection electrodes Ly extending in a horizontal direction. The plurality of driving electrodes Lx are aligned in parallel to each other in the horizontal direction, and the plurality of detection electrodes Ly are aligned in parallel to each other in the vertical direction. The plurality of driving electrodes Lx and the plurality of detection electrodes Ly cross each other in a grid pattern, and are insulated from each other. The sensor element 12 is formed in the vicinity of an intersection between each driving electrode Lx and each detection electrode Ly. In addition, although the shape of each of the electrodes Lx and Ly is drawn in a rectangular shape in the example shown in Fig. 2, each of the electrodes Lx and Ly may have any shape (for example, a diamond pattern).

The driving section 14 applies a driving voltage to each sensor element 12 of the sensor matrix 11. Specifically, according to the control of the processing unit 20, the driving section 14 selects one driving electrode Lx in order from the plurality of driving electrodes Lx, and periodically changes the potential of the selected one driving electrode Lx. Since the potential of the driving electrode Lx is changed in a predetermined range, the driving voltage applied to the sensor element 12 that is formed in the vicinity of the intersection between the driving electrode Lx and the detection electrode Ly is changed in a predetermined range, and charge and discharge occur in the sensor element 12.

The detection value generating section 13 generates a detection value corresponding to electric charges transmitted from each detection electrode Ly when the sensor element 12 is charged or discharged according to the application of the driving voltage by the driving section 14. That is, the detection value generating section 13 samples electric charges transmitted from each detection electrode Ly at a timing synchronized with a periodic change in the driving voltage of the driving section 14, and generates a detection value corresponding to the result of the sampling.

For example, the detection value generating section 13 includes an electrostatic capacitance-voltage conversion circuit (CV conversion circuit) that outputs a voltage corresponding to the electrostatic capacitance of the sensor element 12 and an analog-digital conversion circuit (AD conversion circuit) that converts the output signal of the CV conversion circuit into a digital signal and outputs the digital signal as a detection value. The CV conversion circuit samples electric charges transmitted from the detection electrode Ly according to the control of the processing unit 20 whenever the driving voltage of the driving section 14 is periodically changed to charge or discharge the sensor element 12. Specifically, whenever positive or negative electric charges are transmitted from the detection electrode Ly, the CV conversion circuit transfers the electric charges or electric charges proportional thereto to a reference capacitor, and outputs a signal corresponding to the voltage generated in the reference capacitor. For example, the CV conversion circuit outputs a signal corresponding to the integrated value or average value of electric charges, which are periodically transmitted from the detection electrode Ly, or electric charges proportional to the electric charges. According to the control of the processing unit 20, AD conversion circuit converts the output signal of the CV conversion circuit into a digital signal at predetermined periods, and outputs the digital signal as a detection value.

The sensor unit 10 shown in the example described above detects the approach of an object according to a change in electrostatic capacitance (mutual capacitance) generated between the electrodes Lx and Ly. However, the approach of an object may also be detected using other various methods without being limited to this example. For example, the sensor unit 10 may detect the electrostatic capacitance (self-capacitance) generated between the electrode and ground according to the approach of an object. In the case of the method of detecting the self-capacitance, a driving voltage is applied to the detection electrode. In addition, the sensor unit 10 may use a resistance film method, an electromagnetic induction method, or the like without being limited to the electrostatic capacitance method.

### Processing unit 20

The processing unit 20 is a circuit for controlling the overall operation of the input device, and includes a computer that performs processing according to command codes of a program 35 stored in the storage unit 30. The entire processing of the processing unit 20 may be realized by the computer and a program, or a part or all of the processing of the processing unit 20 may be realized by a dedicated logic circuit.

As shown in Fig. 2, the processing unit 20 includes a sensor control section 21, a change amount calculating section 22, a determination section 23, and a reset section 24.

The sensor control section 21 controls the sensor unit 10 to perform a periodic detection operation of detecting the proximity degree of an object at a plurality of detection positions (sensor elements 12) of the sensor matrix 11 and generating the detection value for each cycle. Specifically, the sensor control section 21 controls the driving section 14 and the detection value generating section 13 so that the selection of a driving electrode and the generation of a pulse voltage in the driving section 14 and the selection of a detection electrode and the generation of a detection value in the detection value generating section 13 are periodically performed at the appropriate timing.

The change amount calculating section 22 calculates a temporal change amount 31 of the detection value detected by the sensor unit 10, and stores the temporal change amount 31 in the storage unit 30. Specifically, the change amount calculating section 22 calculates a difference between the detection value of the sensor unit 10 and a base value 33, which is a detection value in a state in which an object is not close to the detection surface 11, as the change amount 31. The base value 33 is set for each detection position (that is, for each sensor element 12) of the sensor matrix 11. The initial value of the base value 33 is set immediately after turning on the power of the input device 1, for example. Then, the base value 33 is appropriately updated based on the weighted average value of detection values in a state in which an object is not close to the detection surface 11 (for example, in a state in which a touch operation is not determined), for example.

The determination section 23 determines a touch operation based on the change amount 31 calculated by the change amount calculating section 22. Specifically, the determination section 23 specifies one or more peak values that are spatial maximum values of the change amount 31 on the detection surface 11, determines a touch operation in a case where the peak value is equal to or greater than a threshold value TOUCH_TH, and generates touch state data 32 and stores the touch state data 32 in the storage unit 30. The touch state data 32 include a position (coordinates) on the detection surface 11 corresponding to the peak value determined to be a touch operation. In the case of specifying a plurality of peak values based on the change amount 31, the determination section 23 performs the determination of a touch operation and the generation and storage of the touch state data 32 for each of the plurality of peak values.

In addition, the determination section 23 determines a short touch operation (first touch operation) in a case where the duration of a state in which a touch operation is determined is less than a first predetermined time (for example, 30 seconds), and determines a long touch operation (second touch operation) in a case where the duration is equal to or longer than the first predetermined time.

In addition, the determination section 23 determines a grip operation based on the change amount 31 calculated by the change amount calculating section 22. Here, since the conductor portion 5 is provided along the outer edge of the detection surface 11, a detection value at a detection position corresponding to the vicinity of the outer edge of the detection surface 11 is changed when an object comes in contact with the conductor portion 5. Accordingly, the determination section 23 can determine a grip operation based on the change amount 31 at the detection position corresponding to the vicinity of the outer edge of the detection surface 11.

The reset section 24 performs reset processing when predetermined reset conditions are satisfied. Specifically, the reset section 24 performs reset processing in a case where the duration of a state in which a touch operation is determined by the determination section 23 is equal to or longer than the first predetermined time (that is, a long touch operation is determined), there are two or more peak values (that is, peak values determined to be a touch operation) that are equal to or greater than the threshold value TOUCH_TH specified by the determination section 23, and the difference between the first peak value, which is the largest peak value, and the second peak value, which is the second largest peak value, is equal to or greater than a predetermined value HI_TH. More specifically, the reset section 24 performs the reset processing in a case where a state in which the difference between the first peak value and the second peak value is equal to or greater than the predetermined value HI_TH continues for a second predetermined time (for example, 100 milliseconds) after the duration of a state in which a touch operation is determined becomes equal to or longer than the first predetermined time.

The reset processing performed by the reset section 24 includes resetting (initializing) the base value 33. For example, the reset processing is processing for returning the state of the input device 1 to the state immediately after power-on. In this case, not only the base value 33 but also at least a part of information including the change amount 31 and the touch state data 32, which is stored in the storage unit 30, is reset (initialized).

### Storage unit 30

The storage unit 30 stores constant data or variable data used in the processing of the processing unit 20, the program 35 to be executed by a computer in the processing unit 20, and the like. The storage unit 30 is configured to include a volatile memory such as a DRAM or a SRAM, a nonvolatile memory such as a flash memory, a hard disk, and the like, for example.

### Interface unit 40

The interface unit 40 is a circuit for exchanging data between an input device and other control devices (for example, an IC for control of an information device in which an input device is mounted). The processing unit 20 outputs the information stored in the storage unit 30 to a control device (not shown) through the interface unit 40. In addition, the interface unit 40 may acquire a program to be executed by the computer in the processing unit 20 from a disk drive device (not shown; a device for reading a program recorded in a non-transitory recording medium), a server, or the like, and may load the program to the storage unit 30.

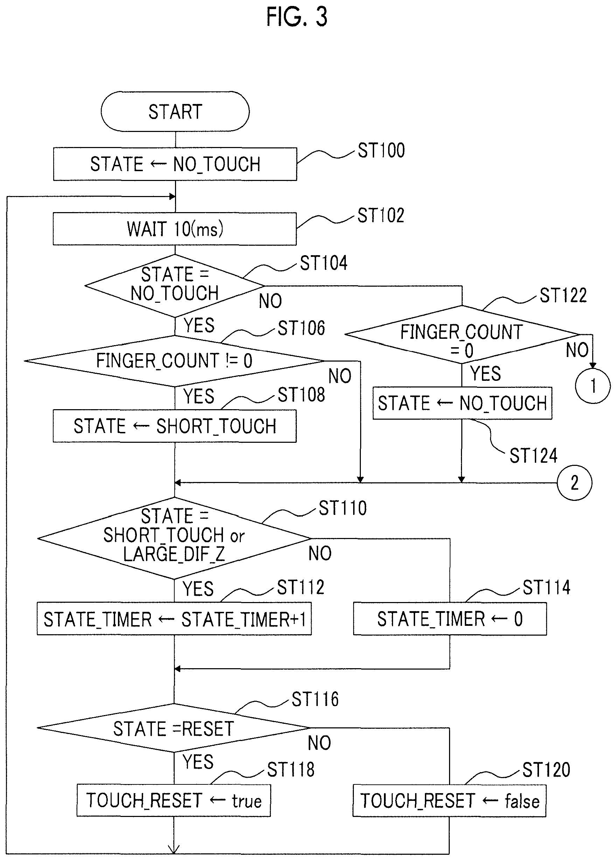

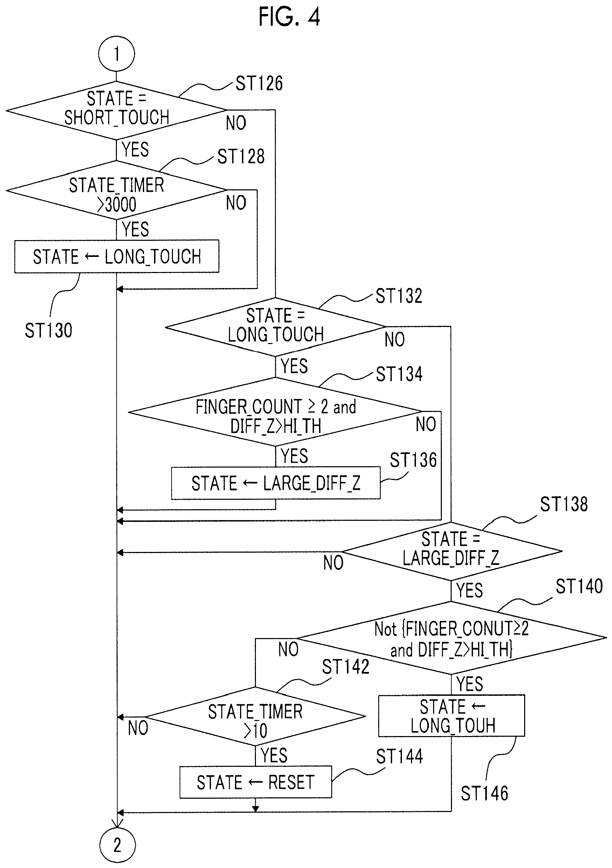

Next, the operation of the input device 1 having the above configuration will be described. Figs. 3 and 4 are flowcharts showing processing that is performed by the determination section 23 in order to detect abnormalities due to temperature changes or the like. This processing is performed after turning on the power of the input device 1.

As shown in Fig. 3, when the power of the input device 1 is turned on, a value NO_TOUCH indicating a non-touch operation state is first set in a variable STATE indicating the state of touch operation (ST100). Then, after a wait of a predetermined time (in the example shown in Fig. 3, 10 milliseconds) (ST102), it is determined whether or not the state of touch operation is a non-touch operation state (ST104).

Immediately after the power is turned on, the state of touch operation is a non-touch operation state (YES in ST104). Accordingly, it is then determined whether or not a variable FINGER_COUNT indicating the number of peak values determined to be a touch operation is a value other than a value 0, that is, whether or not one or more peak values determined to be a touch operation are present (ST106). Although the details will be described later, while no peak value is present (NO in ST106), a value 0 is set in a variable STATE_TIMER indicating the duration of a specific determination state (ST114), and a value false indicating that the execution of reset processing is not required is set in a variable TOUCH_RESET indicating the necessity of the execution of reset processing (ST120).

On the other hand, in a case where one or more peak values determined to be a touch operation are present (YES in ST106), a value SHORT_TOUCH indicating a short touch operation is set in the variable STATE (ST108).

Then, it is determined whether or not the value SHORT_TOUCH or a value LARGE_DIF_Z indicating an abnormal state due to temperature changes or the like, which will be described later, is set in the variable STATE (ST110). Immediately after the execution of ST108, the value SHORT_TOUCH is set in the variable STATE (YES in ST110). Accordingly, 1 is then added to the variable STATE_TIMER (ST112).

Then, it is determined whether or not a value RESET, which indicates a state in which reset processing is required, is set in the variable STATE (ST116). In this stage, since the value RESET is not set in the variable STATE (NO in ST116), a value false is set in the variable TOUCH_RESET (ST120), and the process returns to ST102 (wait of a predetermined time).

Then, in ST104, the value SHORT_TOUCH different from the value NO_TOUCH is set in the variable STATE (NO in ST104). Accordingly, it is then determined whether or not a value 0 is set in the variable FINGER_COUNT (ST122).

Then, in a case where a value 0 is set in the variable FINGER_COUNT (YES in ST122), that is, in a case where the peak value determined to be a touch operation that was present is no longer present, the value NO_TOUCH indicating a non-touch operation state is set in the variable STATE (ST124). When the value NO_TOUCH is set in the variable STATE, a value 0 is set in the variable STATE_TIMER (ST114). That is, the duration of a short touch operation state is reset.

On the other hand, in a case where the value 0 is not set in the variable FINGER_COUNT (NO in ST122), that is, in a case where a state in which one or more peak values determined to be a touch operation are present continues), it is determined whether or not the value SHORT_TOUCH is set in the variable STATE as shown in Fig. 4 (ST126).

In this stage, since the value SHORT_TOUCH is set in the variable STATE (YES in ST126), it is then determined whether or not the value of the variable STATE_TIMER exceeds a predetermined value (in the example shown in Fig. 4, 3000) (ST128). Until the value of the variable STATE_TIMER exceeds the predetermined value, processing of adding 1 to the variable STATE_TIMER (ST112) is repeatedly performed as long as the value SHORT_TOUCH is set in the variable STATE (that is, as long as a state in which one or more peak values determined to be a touch operation are present continues).

Then, when the value of the variable STATE_TIMER exceeds the predetermined value (YES in ST128), a value LONG_TOUCH indicating a long touch operation is set in the variable STATE (ST130). Here, in the example shown in Figs. 3 and 4, a wait of 10 milliseconds is given in ST102 that is repeatedly executed, and 1 is added to the variable STATE_TIMER in ST112 that is repeatedly executed. That is, being determined that the value of the variable STATE_TIMER exceeds a predetermined value 3000 in ST128 means that the state of a short touch operation continues for 30 seconds (3000 × 10 milliseconds). The value of 30 seconds is an example of the first predetermined time of the embodiment of the invention.

When the value LONG_TOUCH is set in the variable STATE, a value 0 is set in the variable STATE_TIMER (ST114). That is, the duration of the determination state is reset.

Then, since the value of the variable STATE is no longer the value SHORT_TOUCH (NO in ST126), it is then determined whether or not the value LONG_TOUCH is set in the variable STATE (ST132). In this stage, since the value LONG_TOUCH is set in the variable STATE (YES in ST132), it is then determined whether or not the number of peak values determined to be a touch operation is 2 or more and whether or not a difference DIFF_Z between the first peak value, which is the largest peak value, and the second peak value, which is the second largest peak value, among the two or more peak values exceeds the threshold value HI_TH (ST134).

On the other hand, in a case where the number of peak values determined to be a touch operation is 2 or more and the difference DIFF_Z exceeds the threshold value HI_TH (YES in ST134), a value LARGE_DIFF_Z indicating abnormalities is set in the variable STATE (ST136). On the other hand, in a case where the number of peak values is less than 2 or in a case where the difference DIFF_Z is equal to or less than the threshold value HI_TH even if the number of peak values is less than 2 (NO in ST134), the determination of ST134 is repeatedly performed.

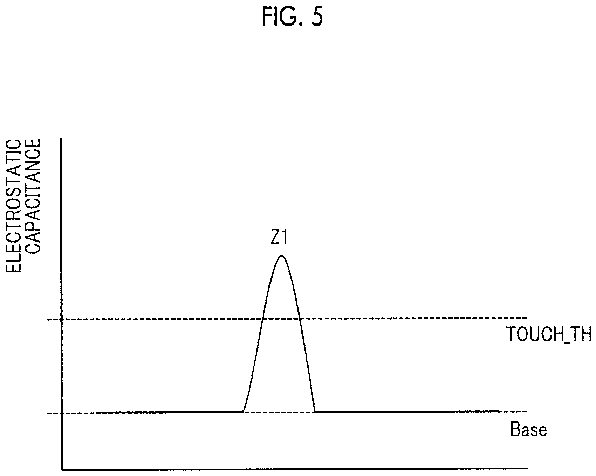

Fig. 5 is a diagram schematically showing the electrostatic capacitance of the detection surface 11 in normal condition. In the example shown in Fig. 5, since a peak value Z1 occurring according to the approach of an object exceeds the threshold value TOUCH_TH, a touch operation is determined.

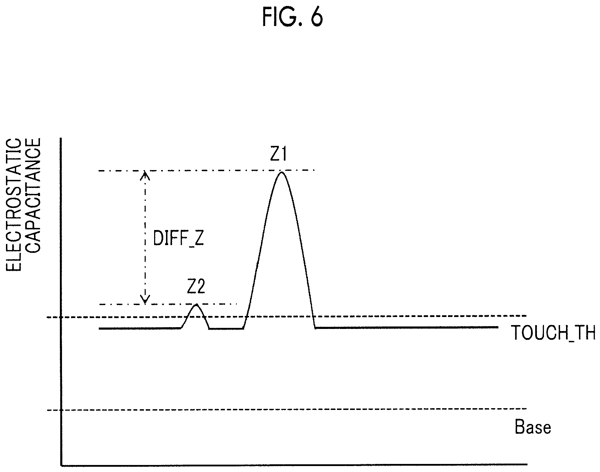

On the other hand, Fig. 6 is a diagram schematically showing the electrostatic capacitance of the detection surface 11 in abnormal condition in which the influence of temperature changes or the like on the detection value (electrostatic capacitance) of the sensor unit 10 occurs. As shown in Fig. 6, in abnormal condition due to temperature changes or the like, the detection value of the sensor unit 10 tends to deviate from a base value (Base) over the entire detection surface 11. For example, in the example shown in Fig. 6, the detection value (electrostatic capacitance) of the entire detection surface 11 slides in a direction, in which the detection value increases, to deviate from the base value. That is, the detection value (original base value) in a state in which an object is not close greatly deviates from the current base value to approach the threshold value TOUCH_TH. Therefore, since a peak value Z2 caused by a slight fluctuation of the detection value exceeds the threshold value TOUCH_TH, erroneous determination as a touch operation is made. Since the peak value Z2 is slightly different from the detection value (original base value) in a state in which an object is not close, the peak value Z2 is greatly different from the peak value Z1 caused by the touch operation of the object. Thus, in abnormal condition in which the base value greatly deviates from the detection value due to temperature changes or the like in a state of touch operation, the difference between peak values (in the example shown in Fig. 6, the difference between the peak values Z1 and Z2) determined to be a touch operation tends to be extremely increased.

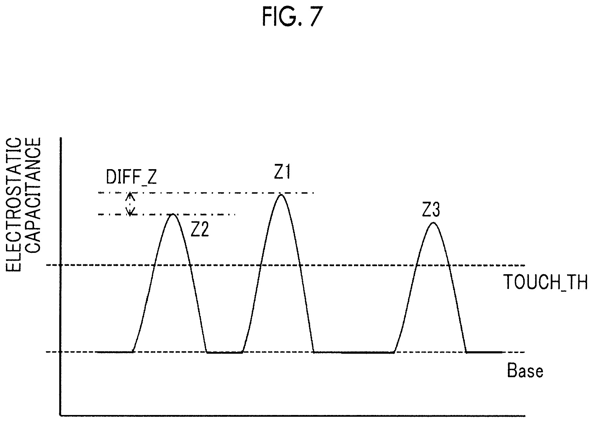

Fig. 7 is a diagram schematically showing the electrostatic capacitance of the detection surface 11 in normal condition, and corresponds to a case where three objects (for example, fingers) are close to the detection surface 11. As shown in Fig. 7, in a case where three objects are close to the detection surface 11, three peak values Z1 to Z3 exceeding the threshold value TOUCH_TH occur. In Fig. 7, since the base value and the detection value in a state in which an object is not close are almost equal, the threshold value TOUCH_TH is sufficiently higher than the base value. For this reason, since the magnitudes of the three peak values with respect to the base value are almost equal, the magnitude of the difference DIFF_Z between the first peak value Z1, which is the largest peak value, and the second peak value Z2, which is the second largest peak value, is smaller than the difference DIFF_Z between two peak values in Fig. 6. Therefore, it is possible to detect an abnormal state, such as that exemplified in Fig. 6, by setting the value of threshold value HI_TH described above in consideration of the difference DIFF_Z between the first peak value Z1 and the second peak value Z2 in each of normal condition and abnormal condition.

When the value LARGE_DIFF_Z indicating abnormalities is set in the variable STATE (ST136), 1 is then added to the variable STATE_TIMER (ST110 to ST112). Then, in a case where the value LARGE_DIFF_Z is set in the variable STATE (YES in ST138) and an abnormal state, in which the number of peak values present is 2 or more and the difference DIFF_Z exceeds the threshold value HI_TH, continues (NO in ST140), processing of adding 1 to the variable STATE_TIMER is repeatedly performed (ST112) until the variable STATE_TIMER exceeds a predetermined value (in the example shown in Fig. 4, 10) (NO in ST142). Then, when the value of the variable STATE_TIMER exceeds the predetermined value (YES in ST142), the value RESET indicating a state in which reset processing is required is set in the variable STATE (ST144).

Here, in the example shown in Figs. 3 and 4, a wait of 10 milliseconds is given in ST102 that is repeatedly executed, and 1 is added to the variable STATE_TIMER in ST112 that is repeatedly executed. That is, being determined that the value of the variable STATE_TIMER exceeds a predetermined value 10 in ST142 means that an abnormal state continues for 100 seconds (10 × 10 milliseconds). The value of 100 milliseconds is an example of the second predetermined time of the embodiment of the invention.

In a case where the abnormal state, in which the number of peak values determined to be a touch operation is 2 or more and the difference DIFF_Z exceeds the threshold value HI_TH, is eliminated (YES in ST140) after the value LARGE_DIFF_Z is set in the variable STATE in ST136, the value of the variable STATE returns to the value LONG_TOUCH (ST146).

Then, when the value RESET is set in the variable STATE (YES in ST116), the value true indicating that the execution of reset processing is required is set in the variable TOUCH_RESET (ST118). According to the setting of the value true in the variable TOUCH_RESET, the reset section 24 performs reset processing.

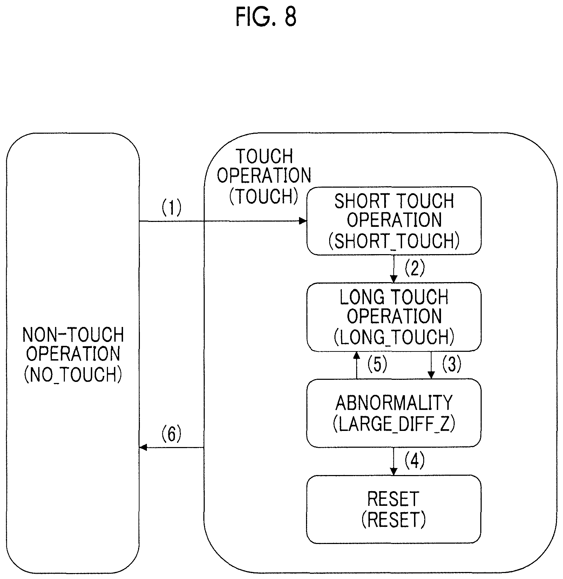

Fig. 8 is a state transition diagram corresponding to the operation described above, and shows the transition of the value of the variable STATE. As shown in Fig. 8, when a peak value exceeding the threshold value TOUCH_TH is specified in a non-touch operation state (variable STATE = value NO_TOUCH), transition to a short touch operation state (variable STATE = value SHORT_TOUCH) occurs (1). Then, when the duration of a short touch operation state exceeds the first predetermined time (for example, 30 seconds), transition to a long touch operation state (variable STATE = value LONG_TOUCH) occurs (2). Then, in a case where the number of peak values determined to be a touch operation is 2 or more and the difference DIFF_Z between the first peak value, which is the largest peak value, and the second peak value, which is the second largest peak value, exceeds the threshold value HI_TH, transition to an abnormal state (variable STATE = value LARGE_DIFF_Z) occurs (3). Then, when the duration of the abnormal state exceeds the second predetermined time (for example, 10 milliseconds), transition to a reset state (variable STATE = value RESET) occurs (4). As described above, the reset section 24 performs reset processing according to the transition to a reset state. In addition, if the abnormal state in which the number of peak values determined to be a touch operation is 2 or more and the difference DIFF_Z exceeds the threshold value HI_TH is eliminated before the duration of the abnormal state exceeds the second predetermined time, the state returns to the long touch operation state (5). In any state, if a peak value exceeding the threshold value TOUCH_TH is no longer present, the state returns to the non-touch operation state (6).

As described above, the input device 1 of the present embodiment includes: the sensor unit 10 that detects the proximity degree of an object with respect to the detection surface 11 and generates a detection value corresponding to the proximity degree of the object as a result of the detection; the change amount calculating section 22 that calculates a temporal change amount of the generated detection value (difference between the base value 33 and the detection value); the determination section 23 that determines a touch operation based on the calculated change amount; and the reset section 24 that performs reset processing in a case where the duration of a state in which a touch operation is determined is equal to or longer than the first predetermined time, two or more peak values that are spatial maximum values of the change amount on the detection surface 11 are present, and the difference DIFF_Z between the first peak value, which is the largest peak value, and the second peak value, which is the second largest peak value, is equal to or greater than the predetermined value HI_TH. Thus, in a state in which a touch operation is determined, the input device 1 detects an abnormality based on the duration and the difference between the first and second peak values, and performs reset processing. Accordingly, even in a case where a touch operation is determined, the input device 1 can suppress erroneous determination due to temperature changes or the like.

While the various embodiments of the invention have been described above, the invention is not limited only to the embodiments described above and includes various variations.

For example, in the input device 1 of the embodiment described above, reset processing is performed in a case where the state, in which the difference between the first and second peak values is equal to or greater than the predetermined value HI_TH, continues for the second predetermined time after the duration of the state in which a touch operation is determined becomes equal to or longer than the first predetermined time. However, without waiting for the passage of the second predetermined time as described above, the reset processing may be performed in a case where the duration of the state in which a touch operation is determined is equal to or longer than the first predetermined time and the difference between the first and second peak values is equal to or greater than the predetermined value HI_TH.

The input device of the embodiment of the invention is not limited to a user interface device for inputting information based on the operation of a finger or the like. That is, the input device of the embodiment of the invention can be widely applied to various devices for inputting information according to the approach of various objects that are not limited to the human body.

It should be understood by those skilled in the art that various modifications, combinations, sub-combinations and alterations may occur depending on design requirements and other factors insofar as they are within the scope of the appended claims.

## Claims

1. An input device (1) for inputting information corresponding to a touch operation on a detection surface (11), comprising:
a sensor unit (10) configured to detect a proximity degree of an object with respect to the detection surface (11) and generate a detection value corresponding to the proximity degree of the object as a result of the detection;
a change amount calculation unit (22) configured to calculate a temporal change amount of the generated detection value, wherein a difference between a base value (33) and the generated detection value is calculated as the change amount; and
a determination unit (23) configured to determine a touch operation based on the calculated change amount;
**characterized in that**
the base value (33) is initially set to an initial value which is a detection value immediately after turning on a power of the input device (1) and the base value (33) is updated based on a weighted average value of detection values in a state in which an object is not close to the detection surface (11), and
the input device (1) further comprises a reset unit (24) configured to perform resetting the base value (33) to the initial value in a case where a duration of a state in which the touch operation is determined is equal to or longer than a first predetermined time, two or more peak values that are spatial maximum values of the change amount on the detection surface (11) are present, and a difference between a first peak value, which is a largest peak value, and a second peak value, which is a second largest peak value, is equal to or greater than a predetermined value.

2. The input device according to Claim 1,
wherein the determination unit (23) is configured to determine the touch operation in a case where the peak value is equal to or greater than a predetermined threshold value.

3. The input device according to Claim 2,
wherein the reset unit (24) is configured to perform the resetting in a case where the duration is equal to or longer than the first predetermined time, there are two or more of the peak values that are equal to or greater than the predetermined threshold value, and the difference between the first and second peak values is equal to or greater than the predetermined value.

4. The input device according to any of Claims 1 to 3,
wherein the determination unit (23) is configured to determine a first touch operation in a case where the duration is less than the first predetermined time, and is configured to determine a second touch operation in a case where the duration is equal to or longer than the first predetermined time.

5. The input device according to any of Claims 1 to 4,
wherein the reset unit (24) is configured to perform the resetting in a case where a state in which the difference between the first and second peak values is equal to or greater than the predetermined value continues for a second predetermined time after the duration becomes equal to or longer than the first predetermined time.

6. A control method of an input device (1) for inputting information corresponding to a touch operation on a detection surface (11), comprising:
a step of detecting a proximity degree of an object with respect to the detection surface (11) and generating a detection value corresponding to the proximity degree of the object as a result of the detection;
a step of calculating a temporal change amount of the generated detection value, wherein a difference between a base value and the generated detection value is calculated as the change amount; and
a step of determining a touch operation based on the calculated change amount,
**characterized in that**
the base value (33) is initially set to an initial value which is a detection value immediately after turning on a power of the input device (1) and the base value (33) is updated based on a weighted average value of detection values in a state in which an object is not close to the detection surface (11), and
the control method further comprises a step of performing resetting the base value (33) to the initial value in a case where a duration of a state in which the touch operation is determined is equal to or longer than a first predetermined time, two or more peak values that are spatial maximum values of the change amount on the detection surface (11) are present, and a difference between a first peak value, which is a largest peak value, and a second peak value, which is a second largest peak value, is equal to or greater than a predetermined value.

7. The control method of an input device according to Claim 6,
wherein, in the step of determining the touch operation, the touch operation is determined in a case where the peak value is equal to or greater than a predetermined threshold value.

8. The control method of an input device according to Claim 7,
wherein, in the step of performing the resetting, the resetting is performed in a case where the duration is equal to or longer than the first predetermined time, there are two or more of the peak values that are equal to or greater than the predetermined threshold value, and the difference between the first and second peak values is equal to or greater than the predetermined value.

9. The control method of an input device according to any of Claims 6 to 8,
wherein, in the step of determining the touch operation, a first touch operation is determined in a case where the duration is less than the first predetermined time, and a second touch operation is determined in a case where the duration is equal to or longer than the first predetermined time.

10. The control method of an input device according to any of Claims 6 to 9,
wherein, in the step of performing the resetting, the resetting is performed in a case where a state in which the difference between the first and second peak values is equal to or greater than the predetermined value continues for a second predetermined time after the duration becomes equal to or longer than the first predetermined time.

11. A program (35) which, when executed by a computer, causes the computer to execute the control method of an input device (1) according to any of Claims 6 to 10.

## Patentansprüche

1. Eingabevorrichtung (1) zum Eingeben von Information entsprechend einem Berührungsvorgang auf einer Erfassungsfläche (11), aufweisend:
eine Sensoreinheit (10), die dazu ausgebildet ist, ein Annäherungsausmaß eines Objekts in Bezug auf die Erfassungsfläche (11) zu erfassen und einen dem Annäherungsausmaß des Objekts entsprechenden Erfassungswert als Resultat der Erfassung zu erzeugen;
eine Änderungsbetrag-Berechnungseinheit (22), die dazu ausgebildet ist, einen zeitlichen Änderungsbetrag des erzeugten Erfassungswerts zu berechnen, wobei eine Differenz zwischen einem Basiswert (33) und dem erzeugten Erfassungswert als Änderungsbetrag berechnet wird; und
eine Bestimmungseinheit (23), die dazu ausgebildet ist, einen Berührungsvorgang auf der Basis des berechneten Änderungsbetrags festzustellen;
**dadurch gekennzeichnet,**
**dass** der Basiswert (33) zu Beginn als Ausgangswert vorgegeben wird, bei dem es sich um einen Erfassungswert unmittelbar nach dem Einschalten einer Energie der Eingabevorrichtung (1) handelt, und der Basiswert (33) aktualisiert wird auf der Basis eines gewichteten Durchschnittswerts von Erfassungswerten in einem Zustand, in dem sich ein Objekt nicht nahe bei der Erfassungsfläche (11) befindet, und
**dass** die Eingabevorrichtung (1) ferner eine Rücksetzeinheit (24) aufweist, die dazu ausgebildet ist, einen Rücksetzvorgang des Basiswerts (33) auf den Ausgangswert in einem Fall vorzunehmen, in dem eine Dauer eines Zustands, in dem der Berührungsvorgang festgestellt wird, gleich einer oder länger als eine erste vorbestimmte Zeitdauer ist, zwei oder mehr Spitzenwerte vorhanden sind, bei denen es sich um räumliche Maximalwerte des Änderungsbetrags auf der Erfassungsfläche (11) handelt, und eine Differenz zwischen einem ersten Spitzenwert, bei dem es sich um den höchsten Spitzenwert handelt, und einem zweiten Spitzenwert, bei dem es sich um einen zweithöchsten Spitzenwert handelt, gleich einem oder größer als ein vorbestimmter Wert ist.

2. Eingabevorrichtung nach Anspruch 1,
wobei die Bestimmungseinheit (23) dazu ausgebildet ist, den Berührungsvorgang in einem Fall festzustellen, in dem der Spitzenwert gleich einem oder größer als ein vorbestimmter Schwellenwert ist.

3. Eingabevorrichtung nach Anspruch 2,
wobei die Rücksetzeinheit (24) dazu ausgebildet ist, den Rücksetzvorgang in einem Fall auszuführen, in dem die Dauer gleich der oder länger als die erste vorbestimmte Zeitdauer ist, zwei oder mehr der Spitzenwerte vorhanden sind, die gleich dem oder größer als der vorbestimmte Schwellenwert sind, und die Differenz zwischen dem ersten und dem zweiten Spitzenwert gleich dem oder größer als der vorbestimmte Wert ist.

4. Eingabevorrichtung nach einem der Ansprüche 1 bis 3,
wobei die Bestimmungseinheit (23) dazu ausgebildet ist, einen ersten Berührungsvorgang in einem Fall festzustellen, in dem die Dauer geringer ist als die erste vorbestimmte Zeitdauer, sowie dazu ausgebildet ist, einen zweiten Berührungsvorgang in einem Fall festzustellen, in dem die Dauer gleich der oder länger als die erste vorbestimmte Zeitdauer ist.

5. Eingabevorrichtung nach einem der Ansprüche 1 bis 4,
wobei die Rücksetzeinheit (24) dazu ausgebildet ist, den Rücksetzvorgang in einem Fall auszuführen, in dem ein Zustand, in dem die Differenz zwischen dem ersten und dem zweiten Spitzenwert gleich dem oder größer als der vorbestimmte Wert ist, für eine zweite vorbestimmte Zeitdauer anhält, nachdem die Dauer gleich der oder länger als die erste vorbestimmte Zeitdauer wird.

6. Steuerungsverfahren einer Eingabevorrichtung (1) zum Eingeben von Information entsprechend einem Berührungsvorgang auf einer Erfassungsfläche (11), das folgende Schritte aufweist:
einen Schritt zum Erfassen eines Annäherungsausmaßes eines Objekts in Bezug auf die Erfassungsfläche (11) und zum Erzeugen eines dem Annäherungsausmaß des Objekts entsprechenden Erfassungswerts als Resultat der Erfassung;
einen Schritt zum Berechnen eines zeitlichen Änderungsbetrags des erzeugten Erfassungswerts, wobei eine Differenz zwischen einem Basiswert und dem erzeugten Erfassungswert als Änderungsbetrag berechnet wird; und
einen Schritt zum Feststellen eines Berührungsvorgangs auf der Basis des berechneten Änderungsbetrags,
**dadurch gekennzeichnet,**
**dass** der Basiswert (33) zu Beginn als Ausgangswert vorgegeben wird, bei dem es sich um einen Erfassungswert unmittelbar nach dem Einschalten einer Energie der Eingabevorrichtung (1) handelt, und der Basiswert (33) aktualisiert wird auf der Basis eines gewichteten Durchschnittswerts von Erfassungswerten in einem Zustand, in dem sich ein Objekt nicht nahe bei der Erfassungsfläche (11) befindet, und
**dass** das Steuerungsverfahren ferner einen Schritt aufweist zum Ausführen eines Rücksetzvorgangs zum Zurücksetzen des Basiswerts (33) auf den Ausgangswert in einem Fall, in dem eine Dauer eines Zustands, in dem der Berührungsvorgang festgestellt wird, gleich einer oder länger als eine erste vorbestimmte Zeitdauer ist, zwei oder mehr Spitzenwerte vorhanden sind, bei denen es sich um räumliche Maximalwerte des Änderungsbetrags auf der Erfassungsfläche (11) handelt, und eine Differenz zwischen einem ersten Spitzenwert, bei dem es sich um den höchsten Spitzenwert handelt, und einem zweiten Spitzenwert, bei dem es sich um einen zweithöchsten Spitzenwert handelt, gleich einem oder größer als ein vorbestimmter Wert ist.

7. Steuerungsverfahren einer Eingabevorrichtung nach Anspruch 6,
wobei in dem Schritt zum Feststellen des Berührungsvorgangs der Berührungsvorgang in einem Fall festgestellt wird, in dem der Spitzenwert gleich dem oder größer als ein vorbestimmter Schwellenwert ist.

8. Steuerungsverfahren einer Eingabevorrichtung nach Anspruch 7,
wobei in dem Schritt zum Ausführen des Rücksetzvorgangs der Rücksetzvorgang in einem Fall ausgeführt wird, in dem die Dauer gleich der oder länger als die erste vorbestimmte Zeitdauer ist, zwei oder mehr der Spitzenwerte vorhanden sind, die gleich dem oder größer als der vorbestimmte Schwellenwert sind, und die Differenz zwischen dem ersten und dem zweiten Spitzenwert gleich dem oder größer als der vorbestimmte Wert ist.

9. Steuerungsverfahren einer Eingabevorrichtung nach einem der Ansprüche 6 bis 8,
wobei in dem Schritt zum Feststellen des Berührungsvorgangs ein erster Berührungsvorgang in einem Fall festgestellt wird, in dem die Dauer geringer als die erste vorbestimmte Zeitdauer ist, und ein zweiter Berührungsvorgang in einem Fall festgestellt wird, in dem die Dauer gleich der oder länger als die erste vorbestimmte Zeitdauer ist.

10. Steuerungsverfahren einer Eingabevorrichtung nach einem der Ansprüche 6 bis 9,
wobei in dem Schritt zum Ausführen des Rücksetzvorgangs der Rücksetzvorgang in einem Fall ausgeführt wird, in dem ein Zustand, in dem die Differenz zwischen dem ersten und dem zweiten Spitzenwert gleich dem oder größer als der vorbestimmte Wert ist, für eine zweite vorbestimmte Zeitdauer anhält, nachdem die Dauer gleich der oder länger als die erste vorbestimmte Zeitdauer wird.

11. Programm (35), das bei Ausführung durch einen Computer den Computer dazu veranlasst, das Steuerungsverfahren einer Eingabevorrichtung (1) nach einem der Ansprüche 6 bis 10 auszuführen.

## Revendications

1. Dispositif d'entrée (1) destiné à entrer des informations correspondant à une opération tactile sur une surface de détection (11), comprenant :
une unité de détection (10) configurée pour détecter un degré de proximité d'un objet par rapport à la surface de détection (11) et pour générer une valeur de détection correspondant au degré de proximité de l'objet au titre du résultat de la détection ;
une unité de calcul d'ampleur de changement (22) configurée pour calculer une ampleur de changement temporel de la valeur de détection générée ; dans lequel une différence entre une valeur de base (33) et la valeur de détection générée est calculée au titre de l'ampleur de changement ; et
une unité de détermination (23) configurée pour déterminer une opération tactile en se basant sur l'ampleur de changement calculée ;
**caractérisé en ce que**
la valeur de base (33) est établie dans un premier temps pour faire office de valeur initiale qui représente une valeur de détection directement après la mise en service du dispositif d'entrée (1) et la valeur de base (33) est mise à jour en se basant sur une valeur moyenne pondérée de valeurs de détection dans un état dans lequel un objet n'est pas proche de la surface de détection (11) ; et
le dispositif d'entrée (1) comprend en outre une unité de réinitialisation (24) configurée pour soumettre la valeur de base (33) à une réinitialisation afin d'obtenir la valeur initiale dans un cas dans lequel une durée d'un état dans lequel l'opération tactile est déterminée comme étant égale ou supérieure à un premier laps de temps prédéterminé, deux valeurs maximales ou plus qui représentent des valeurs maximales spatiales de l'ampleur de changement sur la surface de détection (11) sont présentes, et une différence entre une première valeur maximale, qui représente une valeur maximale la plus grande, et une deuxième valeur maximale, qui représente une deuxième valeur maximale la plus grande, est égale ou supérieure à une valeur prédéterminée.

2. Dispositif d'entrée selon la revendication 1, dans lequel l'unité de détermination (23) est configurée pour déterminer l'opération tactile dans un cas dans lequel la valeur maximale est égale ou supérieure à une valeur seuil prédéterminée.

3. Dispositif d'entrée selon la revendication 2, dans lequel l'unité de réinitialisation (24) est configurée pour mettre en oeuvre une réinitialisation dans un cas dans lequel la durée est égale ou supérieure au premier laps de temps prédéterminé, dans lequel deux des valeurs maximales ou plus sont égales ou supérieures à la valeur seuil prédéterminée et dans lequel la différence entre la première et la deuxième valeur maximale est égale ou supérieure à la valeur prédéterminée.

4. Dispositif d'entrée selon l'une quelconque des revendications 1 à 3, dans lequel l'unité de détermination (23) est configurée pour déterminer une première opération tactile dans un cas dans lequel la durée est inférieure au premier laps de temps prédéterminé et est configurée pour déterminer une deuxième opération tactile dans un cas dans lequel la durée est égale ou supérieure au premier laps de temps prédéterminé.

5. Dispositif d'entrée selon l'une quelconque des revendications 1 à 4, dans lequel l'unité de réinitialisation (24) est configurée pour mettre en œuvre la réinitialisation dans un cas dans lequel un état, dans lequel la différence entre la première et la deuxième valeur maximale est égale ou supérieure à la valeur prédéterminée, se poursuit pendant un deuxième laps de temps prédéterminé, une fois que la durée devient égale ou supérieure au premier laps de temps prédéterminé.

6. Procédé de commande d'un dispositif d'entrée (1) destiné à entrer des informations correspondant à une opération tactile sur une surface de détection (11) comprenant :
une étape de détection d'un degré de proximité d'un objet par rapport à la surface de détection (11) et de génération d'une valeur de détection qui correspond au degré de proximité de l'objet à titre de résultat de la détection ;
une étape de calcul d'une ampleur de changement temporel de la valeur de détection générée ; dans lequel une différence entre une valeur de base et la valeur de détection générée est calculée au titre de l'ampleur du changement ; et
une étape de détermination d'une opération tactile en se basant sur l'ampleur de changement calculée ;
**caractérisé en ce que**
la valeur de base (33) est établie dans un premier temps pour faire office de valeur initiale qui représente une valeur de détection directement après la mise en service du dispositif d'entrée (1) et la valeur de base (33) est mise à jour en se basant sur une valeur moyenne pondérée de valeurs de détection dans un état dans lequel un objet n'est pas proche de la surface de détection (11) ; et
le procédé de commande comprend en outre une étape de mise en œuvre d'une réinitialisation de la valeur de base (33) afin d'obtenir la valeur initiale dans un cas dans lequel une durée d'un état dans lequel l'opération tactile est déterminée comme étant égale ou supérieure à un premier laps de temps prédéterminé, deux valeurs maximales ou plus qui représentent des valeurs maximales spatiales de l'ampleur de changement sur la surface de détection (11) sont présentes, et une différence entre une première valeur maximale, qui représente une valeur maximale la plus grande, et une deuxième valeur maximale, qui représente une deuxième valeur maximale la plus grande, est égale ou supérieure à une valeur prédéterminée.

7. Procédé de commande d'un dispositif d'entrée selon la revendication 6, dans lequel, dans l'étape de détermination de l'opération tactile, l'opération tactile est déterminée dans un cas dans lequel la valeur maximale est égale ou supérieure à une valeur seuil prédéterminée.

8. Procédé de commande d'un dispositif d'entrée selon la revendication 7, dans lequel, dans l'étape de mise en œuvre de la réinitialisation, la réinitialisation est mise en œuvre dans un cas dans lequel la durée est égale ou supérieure au premier laps de temps prédéterminé, dans lequel deux des valeurs maximales ou plus sont égales ou supérieures à la valeur seuil prédéterminée et dans lequel la différence entre la première et la deuxième valeur maximale est égale ou supérieure à la valeur prédéterminée.

9. Procédé de commande d'un dispositif d'entrée selon l'une quelconque des revendications 6 à 8, dans lequel, dans l'étape de détermination de l'opération tactile, une première opération tactile est déterminée dans un cas dans lequel la durée est inférieure au premier laps de temps prédéterminé, et une deuxième opération tactile est déterminée dans un cas dans lequel la durée est égale ou supérieure au premier laps de temps prédéterminé.

10. Procédé de commande d'un dispositif d'entrée selon l'une quelconque des revendications 6 à 9, dans lequel, dans l'étape de mise en œuvre de la réinitialisation, la réinitialisation est mise en œuvre dans un cas dans lequel un état, dans lequel la différence entre la première et la deuxième valeur maximale est égale ou supérieure à la valeur prédéterminée, se poursuit pendant un deuxième laps de temps prédéterminé, une fois que la durée devient égale ou supérieure au premier laps de temps prédéterminé.

11. Programme (35) qui, lorsqu'il est exécuté par un ordinateur, fait en sorte que l'ordinateur met en œuvre le procédé de commande d'un dispositif d'entrée (1) selon l'une quelconque des revendications 6 à 10.
